(19) Europäisches Patentamt
European Patent Office
Office européen des brevets

(11) EP 0 745 986 A1

# (12) DEMANDE DE BREVET EUROPEEN

(43) Date de publication:
**04.12.1996 Bulletin 1996/49**

(51) Int Cl.6: **G11B 7/24**, C07F 15/02, C07F 15/04, C07F 15/06

(21) Numéro de dépôt: **96201412.2**

(22) Date de dépôt: **22.05.1996**

(84) Etats contractants désignés:
**DE DK ES FR GB IT SE**

(30) Priorité: **31.05.1995 FR 9506477**

(71) Demandeurs:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE DK ES GB IT SE**

(72) Inventeurs:
- **Kahn, Olivier**
  **75008 Paris (FR)**
- **Jay, Charlotte**
  **75008 Paris (FR)**
- **Codjovi, Epiphane**
  **75008 Paris (FR)**

(74) Mandataire: **Lottin, Claudine**
**Société Civile S.P.I.D.**
**156, Boulevard Haussmann**
**75008 Paris (FR)**

## (54) Composés chimiques de départ à transition de spin et dispositifs munis de moyens d'inscription, mémorisation et effaçage comprenant un milieu actif incluant au moins un de ces composés

(57) L'invention concerne un composé chimique de départ à transition de spin, sous forme pulvérulente, incluant un réseau avec des molécules formées chacune d'un complexe où un ion métallique M présentant une configuration électronique en d5, ou en d6 ou en d7 est associé à au moins un ligand aminotriazole de formule [$L_2$ N-trz], dans laquelle L est un radical alkyle ($C_nH_{2n+1}$) et n est un nombre entier égal ou supérieur à zéro, chaque molécule incluant en outre un anion sulforganique, comportant un radical sulfito ($SO^-_3$) et le réseau incluant en outre au moins une molécule d'eau ($H_2O$) par molécule du complexe du métal M, la ou les molécules d'eau présentes dans le réseau étant uniquement liée(s) par liaison de type hydrogène au ligand aminotrizole.

Dans ce composé, l'anion peut être par exemple un sulfitoaryle à radical benzénique ou dérivé de radical benzénique, ou à chaîne organique saturée ou insaturée, un sulfitohalogénure d'alkyle ou d'aryle.

Application : Dispositifs de stockage et/ou affichage de données

Référence : Néant.

EP 0 745 986 A1

## Description

L'invention concerne des composés chimiques de départ à transition de spin, et des procédés de réalisation de ces composés de départ.

L'invention concerne également des dispositifs munis de moyens d'inscription, mémorisation, effaçage comprenant un milieu actif incluant au moins un de ces composés de départ. L'invention concerne aussi des procédés pour mettre en oeuvre ces dispositifs.

L'invention trouve son application dans le domaine des dispositifs de stockage, de traitement d'information et/ou d'affichage de données.

Il est déjà connu de la demande de brevet EP N° 0 543 465 une famille de composés apte à former des matériaux inscriptibles et effaçables thermiquement.

Cette famille est formée d'un réseau comprenant des molécules incluant :

A) un métal qui peut être le fer $Fe^{II}$ ou $Fe^{III}$, ou le cobalt $Co_{II}$,
B) des ligands associés à ce métal, tels que :

* un 1-2-4 triazole substitué de formule abrégée R-Trz où R est un alkyle $C_n H_{2n+1}$

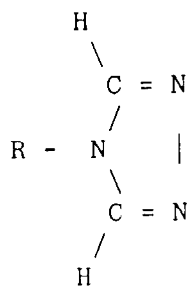

(formule développée de R-Trz)

* un 1-2-4 triazolate de formule abrégée $Trz^-$

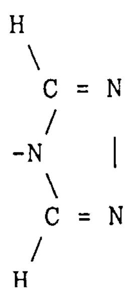

(formule développée de $Trz^-$)

C) un anion choisi parmi $BF_4^-$, $ClO_4^-$, $CO_3^{2-}$, $Br^-$, $Cl^-$
D) en outre obligatoirement au moins une molécule d'eau $H_2O$ non liée de façon covalente avec le complexe du métal, mais qui est présente dans le réseau grâce à un agent hygroscopique choisi parmi les précurseurs du noyau de métal,
E) et un agent dopant qui est un aminotriazole de formule abrégée R'-Trz où R' est un groupe amine $N\text{-}(C_nH_{2n+1})_2$

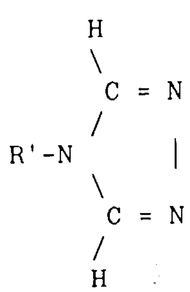

(formule développée de R'-Trz)

La formule générale des molécules de la famille décrite dans ce document cité s'écrit de la façon suivante :

$$M^{II} [(R\text{-}Trz)_2(Trz^-)]_{1-x} (R'\text{-}Trz)_x A, n H_2O$$

Dans cette formule : M est le métal, A est l'anion,

Trz
R-Trz
R'-Trz } sont des ligands de types triazolate et triazole

substitué, en proportion respective réglée par la valeur x de la concentration,
et n est un nombre entier non nul de molécules d'eau $H_2O$ non liée de façon covalente à la molécule de complexe du métal.

Dans cette formule, en outre, cette valeur x de concentration est petite, de manière à ce que le ligand de formule R'-Trz se trouve en faible proportion et constitue seulement un agent de dopage qui agit sur les propriétés intrinsèques du matériau.

Un procédé de préparation des composés de cette famille générale consiste à mettre en présence un sel du métal (par exemple $Fe(ClO_4^-)_2$ avec les ligands, dans une solution acide, ce qui produit un précipité. Ensuite le précipité est séparé de la solution. Ce précipité est recueilli sous forme de poudre. En utilisant le sel du métal en excès, une certaine quantité d'eau est capturée.

Les composés de la famille générale décrite dans le document EP 0543 465 cité présentent une transition d'états de spin, entre un état dit bas spin (LS) et un état dit haut spin (HS) qui est induite exclusivement thermiquement, et qui est accompagnée de modifications électroniques et structurelles des molécules. Ces modifications provoquent un changement abrupt du spectre d'absorption des molécules et donc de la couleur des composés, les niveaux électroniques étant devenus différents.

Ainsi dans l'état bas spin (LS de l'anglais : Low-Spin) les composés sont pourpre foncé, alors que dans l'état haut spin (HS de l'anglais : High-Spin) ces composés sont d'un blanc de craie. De plus, chacun des états haut spin (HS) et bas spin (LS) est un état parfaitement stable.

La transition de spin des composés connus suppose l'existence de deux puits de potentiel, l'un correspondant à l'état bas spin LS, l'autre correspondant à l'état haut spin HS. Ces puits de potentiel sont séparés par une barrière de potentiel. Le bas de chacun des puits de potentiel correspond respectivement à un premier et à un second niveaux d'énergie, le niveau d'énergie du bas du puits haut spin étant plus élevé que le niveau d'énergie du bas du puits bas spin.

Par application d'une perturbation thermique à l'un des composés de la famille, d'abord placé dans l'état stable bas spin (LS), où les électrons sont piégés dans le premier puits de potentiel, des états haut spin excités non-stables sont induits, puis les électrons retombent via des transitions permises, en suivant une voie de relaxation principale qui est celle du second puits de potentiel correspondant à un état haut spin parfaitement stable dans une gamme de température donnée. Les électrons restent piégés dans le second puits de potentiel correspondant à l'état haut spin HS et ne retournent pas spontanément dans le premier puits de potentiel correspondant à l'état bas spin LS. Pour retrouver cet état bas spin LS, il est nécessaire de refroidir le composé en-deça de la température de transition haut spin vers bas spin.

Ces matériaux présentent donc, lors des transitions d'états de spin, un effet retard, dû à la coopérativité intermoléculaire, d'où il résulte un phénomène d'hystérésis.

En effet, du fait de la coopérativité, lors de l'application d'une perturbation thermique, il se produit que :

- ou bien pratiquement toutes les molécules transitent en même temps au sein d'un agrégat, (ou réseau)
- ou bien pratiquement aucune ne transite.

Ces composés montrent donc une région de bistabilité entre une première température de transition haut spin vers bas spin et une seconde température de transition bas spin vers haut spin, correspondant au phénomène d'hystérésis ; et cette région de bistabilité est centrée sur la température critique Tc du cycle d'hystérésis.

Aussi, les composés de la famille générale connus du document EP 0 543 465 cité peuvent agir comme des matériaux à mémoire, inscriptibles et effaçables thermiquement, lisibles optiquement, et donc être utilisés aussi bien pour le stockage d'informations, pour le traitement d'informations ou pour l'affichage d'informations.

Ce document cité révèle que le domaine de température dans lequel ces composés opèrent, dépend essentiellement de la nature du ligand choisi comme agent de dopage.

Or, pour avoir une application industrielle grand public comme matériaux d'enregistrement ou stockage d'information, les composés de la famille connus du document cité devraient pouvoir être utilisés dans le domaine des températures ambiantes. A cet effet, ces composés devraient montrer une amplitude du cycle d'hystérésis de plusieurs dizaines de degrés, avec une température critique Tc de l'ordre de la température ambiante telle que : $Tc \simeq 293K$ (+20°).

Le document cité décrit une série de composés exemplifié 1 à 4 sur le Tableau 1, parmi lesquels :

* le composé N°3 de formule :

$$Fe^{2+}[(H\text{-}Trz)_2\ (Trz^-)]\ (BF_4^-),\ 6H_2O$$

dont l'amplitude d'hystérésis est moyenne $\Delta T = 40K$
mais dont la température critique est bien trop élevée $T_C \simeq +343K$ (+70°C),

* le composé n°1 de formule

$$Fe^{2+}[(NH_2\text{-}Trz)_3\ (BF_4)_2,\ 6H_2O$$

dont l'amplitude d'hystérésis est trop faible $\Delta T = 10K$ et la température critique est également trop faible $T_C = +253K$ (-20°C).

Le document cité enseigne que l'on peut agir sur la température critique d'un composé donné en introduisant dans ce composé un autre composé de la famille comme agent de dopage.

Par exemple, il est recommandé de doper le composé N°3 au moyen du composé N°1, ce qui fournit le composé N°5 du Tableau II du document cité ce composé N°5 a pour formule :

$$Fe^{II}[(HTrz)_2(Trz^-)]_{0,9}\ (NH_2\text{-}Trz)_{0,1}(BF_4^-),\ 6H_2O$$

où

| | | |
|---|---|---|
| $Trz^-$ est le 1-2-4 triazolate | } | comme ligands |
| H-Trz est le 1-2-4 triazole | | |

$NH_2$-Trz est l'aminotriazole comme dopant.
avec une température critique convenable $Tc \simeq 293$ à 298K (20 à 25°C) mais avec une amplitude d'hystérésis $\Delta T =$ 10 à 20K bien trop faible.

Donc le document cité enseigne des moyens pour agir sur la température critique de manière à la rendre proche de la température ambiante, mais n'enseigne aucun moyen pour conserver ou obtenir en même temps une amplitude d'hystérésis grande et convenable.

Des tableaux I et II du document cité, il ressort qu'aucun composé exemplifié n'est réellement sans reproche. Du document cité lui-même, il ne ressort aucun moyen précis pour obtenir directement un composé ayant une grande amplitude d'hystérésis centrée sur la température ambiante, donc ayant une région de bistabilité absolument convenable pour l'application industrielle envisagée.

La présente invention a pour objet de proposer des composés sélectionnés parmi ceux :

- qui présentent des transitions de spin induites thermiquement, donc qui sont thermiquement inscriptibles et effaçables,
- qui sont lisibles optiquement,
- qui présentent des états de SPIN stables,
- qui présentent une température critique située dans la gamme des températures ambiantes,
- qui ont une région de bistabilités de plus grande amplitude que celle des composés proposés par le document cité EP 0543 465, de manière à ce que l'écriture et l'effacement puissent être mieux contrôlés, et que, en particulier, les températures auxquelles l'écriture ou l'effacement sont produits répondent aux normes imposées par les fabriquants de dispositifs d'affichage, normes qui sont :

$T \leq 278K$ (5°C) pour l'effacement

T > 333K (50°C) pour l'écriture.

Ces buts sont atteints au moyen d'un composé chimique de départ à transition de spin, sous forme pulvérulente, incluant un réseau avec des molécules formées chacune d'un complexe où un ion métallique M présentant une configuration électronique en d5, ou en d6, ou en d7, est associé à au moins un ligand aminotriazole de formule :

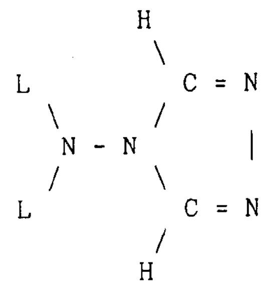

formule aminotriazole dans laquelle L est un radical alkyle ($C_nH_{2n+1}$) et n est un nombre entier égal ou supérieur à zéro, chaque molécule incluant en outre un anion sulforganique, comportant un radical sulfito ($SO_3^-$), tel que :

- un sulfitoaryle où le radical sulfito est lié à un radical benzénique ou à ses dérivés,
- un sulfitoalkyle où le radical sulfito est lié à une chaîne organique saturée ou insaturée,
- un sulfitohalogénure d'alkyle,
- un sulfitohalogénure d'aryle,

et le réseau incluant en outre au moins une molécule d'eau par molécule du complexe métallique, la ou les molécules d'eau présentes dans le réseau étant uniquement liée(s) par liaison de type hydrogène au ligand aminotriazole.

Ce composé de départ montre un effet qui n'était pas connu de la demande de brevet européen EP 0 543 465. Cet effet consiste dans le fait que le composé de départ selon l'invention présente à la fois :

- une amplitude de bistabilité grande correspondant à une hystérésis d'amplitude $\Delta T \geq 70°K$,
- une région de bistabilité exactement centrée sur la température ambiante correspondant à une température critique $Tc \simeq 290$ à 300K (17°C à 27°C).

Le nouveau type d'anion des molécules des réseaux des composés de départ, défini comme anion sulforganique, agit sur la force des liaisons hydrogènes entre les ligands aminotriazoles et les molécules d'eau ($H_2O$) du réseau. En contrôlant bien la force des liaisons hydrogènes, on contrôle de ce fait mieux la coopérativité entre les molécules du réseau.

On rappelle que les transitions de spin sont dues à la coopérativité des molécules du réseau, coopérativité qui fait que, ou bien pratiquement toutes les molécules transitent ensemble, ou bien pratiquement aucune molécule ne transite.

Dans les composés connus de l'état de la technique cité, les liaisons intermoléculaires étaient dues uniquement aux liaisons hydrogènes entre les ligands 1-2-4 triazoles et les molécules d'eau. Ces liaisons n'étaient pas contrôlables.

Dans les présents composés, les liaisons de type hydrogène entre les ligands aminotriazoles et les molécules d'eau sont renforcées et contrôlées de manière étonnante par la présence des anions sulforganiques. Il en résulte que, lors des transitions de spin, un plus grand nombre de molécules transitent ensemble dans un temps plus court.

En utilisant, comme ligands dans les molécules, des aminotriazoles, on contrôle la température critique Tc de la région de bistabilité des présents composés de départ ; et en utilisant des composés sulforganiques comme anions dans les molécules, on contrôle en outre les forces de liaisons de type hydrogène entre lesdits ligands aminotriazoles et les molécules d'eau, et on contrôle par conséquent l'amplitude de températures ΔT correspondant à la région de bistabilité autour de cette température critique Tc.

L'obtention simultanée d'une température critique Tc pratiquement égale à la température ambiante et d'une amplitude de température ΔT correspondant à la région de bistabilité des composés aussi grande que 70K n'avait jamais été possible jusqu'à maintenant.

Ces propriétés nouvelles permettent de mieux appliquer ce composé de départ à la réalisation de milieux actifs pour dispositifs d'affichage, d'effacement et de traitement d'information.

Les présents composés de départ à transition de spin sont trouvés sous forme pulvérulente. Ces composés en poudre sont associés à des liants, ou employés pour former des couches déposées sur un support, de manière à constituer un milieu actif pour un dispositif d'inscription, mémorisation et/ou affichage d'informations.

L'invention est décrite en détail ci-après, en référence avec les figures schématiques annexées, dont :

- la FIG.1 représente l'enthalpie H correspondant à la transition de spin d'une mole de composé, en fonction de coordonnées moléculaires arbitraires, par exemple la distance D métal-ligand ;
- la FIG.2 représente le cycle d'hystérésis d'un composé exemplifié, référencé composé AA) ;
- la FIG.3 illustre les différentes étapes du procédé d'inscription et effacement mettant en oeuvre le composé a) exemplifié.

I- **Formulation chimique des composés de départ sélectionnés selon l'invention**

Selon l'invention, on décrit ci-après une sous-famille de composés sélectionnés parmi la famille générale de composés à transition de spin. On emploiera indifféremment les termes "composés à transition de spin", ou "composés de départ à transition de spin" pour désigner les produits sélectionnés selon l'invention dans cette formule générale.

Comme les composés déjà connus de la famille générale, les composés de la sous-famille sélectionnée possèdent des propriétés de transition de spin induites exclusivement thermiquement, aussi bien pour l'état bas spin (LS) que pour l'état haut spin (HS). Ces transitions sont associées à un phénomène d'hystérésis entre l'état bas spin LS et haut spin HS.

Les composés de la sous-famille décrits ci-après montrent enfin, pour la première fois, les propriétés qui sont indispensables pour la réalisation industrielle à grande échelle de dispositifs d'affichage et de traitement d'informations.

Ces composés montrent, simultanément, une température critique Tc à la température ambiante et une amplitude d'hystérésis $\Delta T$ égale ou supérieure à 70K.

Pour montrer ces propriétés, néanmoins, ces composés sélectionnés doivent être préparés selon un mode de réalisation approprié, faute de quoi leurs propriétés intéressantes ne sont pas obtenues.

Ia) **Formulation générale**

La sous-famille des composés à transition de spin sélectionnés selon l'invention comprend des composés chimiques de départ, sous forme pulvérulente, formés d'un réseau incluant des molécules constituées chacune d'un complexe métal-ligand et d'anions, et incluant en outre au moins une molécule d'eau par molécule du complexe métal-ligand.

Ib) **Le métal du complexe métal-ligand**

La figure 1 représente en fonction de coordonnées atomiques arbitraires, qui peuvent être par exemple la distance D métal-ligand, la variation d'enthalpie $\Delta H$ liée à l'équation de Gibbs :

$$\Delta G = G_{HS} - G_{LS} = \Delta H - T.\Delta S,$$

où $\Delta H$ est la différence d'enthalpie,

T la température,
$\Delta S$ la différence d'entropie.
$\Delta G$ est la différence des énergies libres de Gibbs liées aux états HS et LS.

La transition de spin des matériaux selon l'invention suppose l'existence de deux puits de potentiel, l'un correspondant à l'état bas spin LS, l'autre correspondant à l'état haut spin HS. Ces puits de potentiel sont séparés par une barrière de potentiel. Les parties inférieures des puits de potentiel correspondent respectivement aux niveaux d'énergie $H_{LS}$ et $H_{HS}$. L'énergie relative à la barrière de potentiel est notée $H_B$.

La différence d'énergie entre les parties inférieures des deux puits de potentiel est la variation $\Delta H$ liée à l'énergie de Gibbs donnée plus haut.

Par application d'une perturbation thermique à l'un des composés sélectionnés, d'abord placé dans l'état stable bas spin (LS), où les électrons sont piégés dans le premier puits de potentiel, des états haut spin excités non-stables sont induits, puis les électrons retombent via des transitions permises en suivant une voie de relaxation principale qui est celle du second puits de potentiel correspondant à un état haut spin (HS) parfaitement stable. Les électrons restent piégés dans le second puits de potentiel correspondant à HS et ne retournent pas spontanément dans le premier puits de potentiel correspondant à LS. Pour retrouver cet état LS, il est nécessaire de refroidir le composé au-delà de la température correspondant à l'état bas spin (LS). Un phénomène d'hystérésis est donc lié aux propriétés de transition de spin.

La figure 2 montre un tel cycle d'hystérésis. La fraction molaire MF de matériau ayant transité à une température T est portée en ordonnée et la température T en abscisse.

La stabilité de chacune des états LS et HS est fixée par cette différence $\Delta G$ d'énergie libre de Gibbs qui correspond à la transition de spin d'une quantité donnée du matériau, par exemple 1 mole. Il est donc très important de prendre en compte les valeurs relatives des termes $\Delta H$ et $T\Delta S$.

Comme on l'a dit précédemment, les conditions thermodynamiques ont été choisies pour que les composés sélectionnés et exemplifiés montrent deux états stables à température ambiante. A cette température, le terme d'entropie $T\Delta S$ de la formule de Gibbs, peut devenir non négligeable dans certaines conditions thermodynamiques. Il faut d'abord noter, en référence avec la formule de Gibbs et avec la figure 1, que plus le terme $\Delta G$ est grand, et plus il est négatif, plus les phénomènes liés à une transition de spin ont des possibilités de se produire.

Le terme d'entropie $T\Delta S$ joue donc un rôle important dans le phénomène utilisé pour mettre en oeuvre l'invention. Il implique

- une participation d'un terme de dégénérescence de spin de l'ion métallique de la molécule,
- et une participation d'un terme dû au réseau.

Le terme de dégénérescence de spin se réfère à la dégénérescence des états atomiques de l'ion métallique de la molécule. Le terme de dégénérescence dépend de la configuration électronique de l'ion métallique choisi et est donné par la formule :

$$2s + 1$$

où s est la valeur de spin. Le terme de dégénérescence peut varier de 1 à 5.

On appelle ci-après $s_{HS}$ la valeur de spin pour l'état haut spin et $s_{LS}$ la valeur de spin pour l'état bas spin.

La variation d'entropie $\Delta S$ est donnée par la relation :

$$\Delta S = R\ell_n \frac{2s_{HS}+1}{2s_{LS}+1}$$

où le terme $R\ell_n$ est une constante qui dépend de la constante R des gaz parfaits.

Il faut savoir que :

- plus la différence entre les valeurs de spin $s_{HS}$ et $s_{LS}$ est grande, et plus l'effet magnétique lié à la transiton de spin est détectable. Ce qui est favorable à l'application envisagée selon l'invention.
- plus la différence entre ces valeurs de spin est petite, et plus la différence d'entropie $\Delta S$ est petite. Comme le terme $\Delta S$ intervient dans l'équation de Gibbs sous la forme $-T.\Delta S$ (moins T multiplié par $\Delta S$), plus la différence d'entropie est petite et plus la température critique du phénomène de transistion du spin augmente, ce qui est favorable à l'application envisagée selon l'invention. En effet, il faut atteindre au moins une température critique Tc égale à la température ambiante, ce qui est difficile, car la plupart des matériaux à transition de spin connus depuis plusieurs années ont des températures critiques bien inférieures à 273 K.

On constate donc qu'il existe deux situations favorables, mais contradictoires, difficiles à mettre en oeuvre simultanément. C'est pourquoi on propose ci-après une sélection d'ions métalliques qui permettent d'arriver à un compromis entre ces deux situations parce qu'ils présentent à la fois :

- une différence entre les valeurs de spin $s_{HS}$ et $s_{LS}$, suffisante pour obtenir des effets magnétiques détectables de manière appropriée,
- et une différence entre ces valeurs pas trop grande, de manière à ce que la différence d'entropie $\Delta S$ qui en résulte ait une valeur convenable conduisant à une température critique Tc exactement dans la zone dite de températures ambiantes 270 à 300K.

De ce fait, les ions métalliques sélectionnés pour former les molécules du réseau sont ceux qui présentent une configuration électronique en d5, d6, d7, indiquée par exemple sur le tableau de classification périodique des éléments connus de l'homme du métier.

Tous les ions métalliques ayant une telle configuration électronique pourraient être utilisés pour former le complexe métal ligand.

On choisira de préférence :

$Fe^{2+}$ qui a une configuration électronique en d6 et qui présente deux états de spin entre une valeur de spin :

$s_{LS} = 0$ où il est diamagnétique pour l'état bas spin,
et $s_{HS} = 2$ où il est paramagnétique pour l'état haut spin,

$Co^{2+}$ qui a une configuration électronique en d7, qui présente une valeur de spin :

$s_{LS} = 1/2$ pour l'état bas spin,
$s_{HS} = 3/2$ pour l'état haut spin,

$Co^{3+}$ qui a une configuration électronique en d6, et présente une valeur de spin :

$s_{LS} = 0$ pour l'état bas spin,
$s_{HS} = 2$ pour l'état haut spin

$Ni^{3+}$ qui a une configuration électronique en d7, qui présente une valeur de spin :

$s_{LS} = 1/2$ pour l'état bas spin,
et $s_{HS} = 3/2$ pour l'état haut spin.

On a donc intérêt à sélectionner les ions métalliques qui présentent la transition la plus grande entre les deux états de spin, c'est-à-dire la différence la plus grande entre $s_{LS}$ et $s_{HS}$, pour obtenir des effets magnétiques suffisamment détectables.

Un cas particulier est celui de $Fe^{3+}$. Cet ion métallique présente une configuration électronique en d5 et entre donc dans la catégorie des ions qui pourraient être utilisés. Ses états de spin varient entre $s_{LS} = 1/2$ et $s_{HS} = 5/2$, donc présentent un écart suffisant. Mais cet ion est naturellement rouge, ce qui met sa bande d'absorption en coïncidence avec la bande d'absorption du composé de départ dans l'opération de transition de spin. Ce composé de départ ne peut donc changer de couleur de manière significative et utile, lors de sa transition de spin.

Ic) **Les ligands du complexe métal-ligand**

On a vu qu'un compromis doit être trouvé entre un terme de dégénérescence suffisamment grand pour impliquer un effet de spin décelable, et pas trop grand pour rester dans un domaine de températures ambiantes, seules susceptibles d'applications industrielles.

On a vu aussi qu'en induisant l'ordre dans la structure par la création de ponts liants entre noyaux métalliques (ordre à courte distance) on voit diminuer le terme d'entropie $\Delta S$, d'où il résulte que l'état thermique a alors moins d'influence sur les transitions de spin et que la stabilité de l'état bas spin LS à des températures élevées (c'est-à-dire s'approchant de la température ambiante par rapport au zéro absolu) est favorisée. Pour former ces ponts liants entre noyaux métalliques, l'ion métallique du complexe métal-ligand doit être associé à au moins un ligand du type 1-2-4 aminotriazole qui est un 1-2-4 triazole substitué ayant un radical amine.

La formule générale des 1-2-4 triazoles substitués est :

(1) 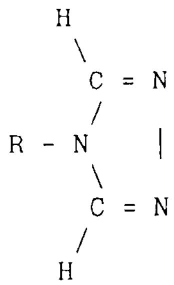 noté en abrégé R-trz

Dans la formule de ces 1-2-4 triazoles substitués

(2) 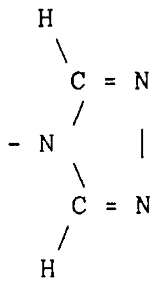 est le radical triazolate noté ($trz^-$)

et R est un autre radical qui doit être une amine pour former le ligand amino-triazole recherché. Dans ce cas, le radical R amine a pour formule :

(3) 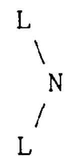

Dans cette formule du radical amine, L peut être un radical alkyle tel que :

(5) $C_n H_{2n+1}$

où n est un nombre entier égal ou supérieur à zéro.

De ce fait, la formule complète du ligand 1-2-4 amino-triazole est :

(4) 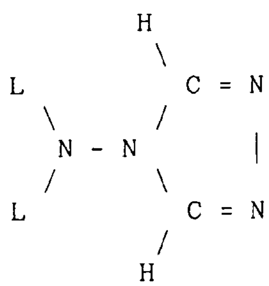 noté en abrégé $L_2$ N-trz

Parmi les nombreux ligands amino-triazoles possibles, on retiendra particulièrement le suivant :

(6) 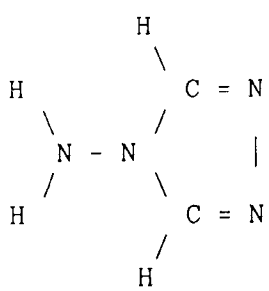 noté en abrégé $H_2$ N-trz

Il résulte de l'enseignement précédent que le complexe métal-ligand peut avoir par exemple pour formule, dans laquelle M est un ion métallique déjà décrit :

(7) $M [L_2 N - trz]_3$

où L est un alkyle $C_n H_{2n+1}$

$$(8) \qquad M [H_2 N - trz]_3$$

Le complexe métal-ligand peut comprendre plusieurs ligands différents :

Par exemple plusieurs ligands amniotriazoles différents, ayant pour formules :

$$(9) \qquad M [L_2 N\text{-}trz]_{3-x} [L'_2 N\text{-}trz]_x$$

où L et L' sont deux alkyle différents, et où x est une concentration comprise entre 0 et 3,

$$(10) \qquad M [L_2 N\text{-}trz]_{3-x-y} [L'_2 N\text{-}trz]_x [L''_2 N\text{-}trz]_y$$

où L, L', L" sont trois alkyls différents, où x et y sont des concentrations telles que x+y <3.

Le complexe métal-ligand peut comprendre, outre au moins un ligand amninotriazole, en complément, un ou plusieurs ligands tels que :

un triazole substitué de formule :

(1) 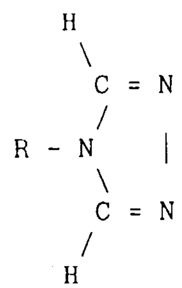 noté en abrégé R-trz

formule dans laquelle R est un radical alkyle $C_n H_{2n+1}$.

Selon les valeurs du nombre entier n, on obtient des radicaux alkyles différents que l'on écrit ci-après R, R', R" etc. Parmi les nombreux ligands triazoles substitués possibles obtenus par différentes valeurs de l'entier n dans la formule du radical alkyle (5), on retiendra particulièrement :

(11) 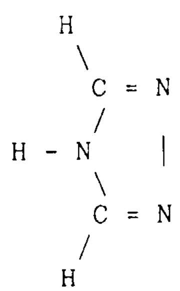 noté en abrégé H-trz

Le complexe métal-ligand peut comprendre aussi, outre au moins obligatoirement un ligand aminotriazole, en complément, un ou plusieurs ligands triazolates notés $trz^-$ dont la formule est :

(2) 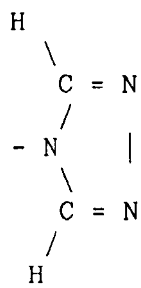 noté en abrégé ($trz^-$)

Il résulte de l'enseignement précédent que le complexe métal-ligand peut avoir aussi pour formules :

(12) $M [L_2 N\text{-}trz]_{3-x} [R\text{-}trz]_x$ où $0 < x < 3$

(13) $M [L_2 N\text{-}trz]_{3-x-y} [R\text{-}trz]_x [R'\text{-}trz]_y$ où $x + y < 3$

(14) $M [L_2 N\text{-}trz]_{2-x} [R\text{-}trz]_x [trz^-]$ où $x < 2$

(14') $M [L_2 N\text{-}Trz]_{3-x-y} [R\text{-}trz]_x [trz^-]_y$ où $x + y < 3$

(15) $M [L_2 N\text{-}trz]_2 [trz^-]$

(15') $M (L_2 N\text{-}trz)_{3-y} [trz^-]_y$ où $y < 3$

(16) $M [L_2 N\text{-}trz] [trz^-]_2$

Evidemment, les ligands 1-2-4 triazoles, ou 1-2-4 triazolates peuvent être remplacés en tout ou partie, par des ligands aminotriazoles à partir des formules (9) et (10).

Selon l'ion métallique sélectionné, selon la valeur de l'entier n dans les radicaux alkyle R et amine $L_2N$, et selon les ligands triazoles et triazolates associés au ligand amino-triazole, de nombreuses combinaisons sont offertes pour former le complexe métal-ligands.

Néanmoins, ces combinaisons sont limitées par l'obligation d'inclure au moins 1 ligand amino-triazole dans ce complexe métal-ligands, et par l'obligation de former ce complexe avec un ion métallique ayant une combinaison électronique en d5, d6 ou d7.

Id) **<u>Les anions des molécules</u>**

Les molécules du réseau, comportent, outre le complexe d'un ion métallique et d'un des ligands décrits plus haut, un anion du type suforganique.

De préférence, cet anion de type suforganique comprend un radical sulfito $SO^-_3$.

Parmi les anions sulforganiques à radical sulfito, on retiendra particulièrement les sulfito-aryle, où le radical sulfito ($SO^-_3$) est lié à un radical cyclique Φ du type benzénique ($C_6H_5^+$) ou à l'un de ses dérivés ; parmi les sulfito-aryles on cite comme exemples :

* Le sulfito-benzène ($SO^-_3$) - Φ de formule :

(17) 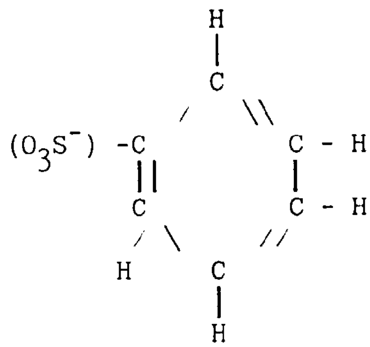

* les sulfito-aryle substitués $(O_3S)^-$ - $C_6H_4$ - R de formule :

(18) 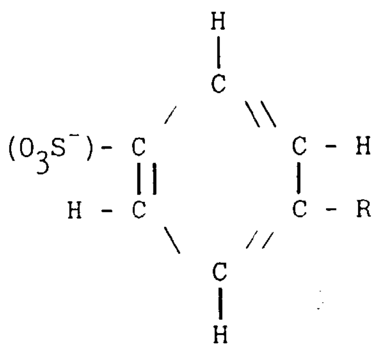

où R est le radical alkyle $C_n H_{2n+1}$ (formule 5) en abrégé $(O_3S^-)$ - Φ - R

dont la formule développée est alors la suivante :

(19) 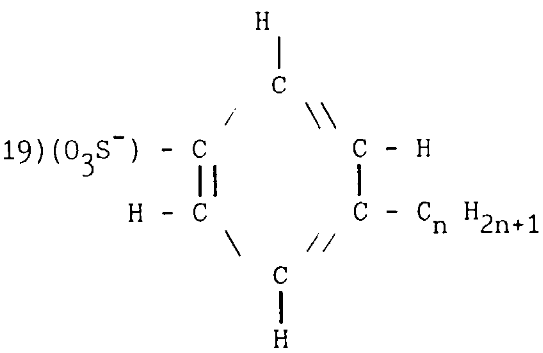

Parmi les sulfito-aryle substitués de formule (19) précédente, on cite le sulfito-méthyl-benzène où le radical méthyl est en position para. Cet anion est appelé tosylate (en abrégé tos) ; et est formé à partir du radical tosyl $SO_2$ - $C_6H_4$ - $CH_4$. Cet anion a pour formule abrégée :

$$(SO_3^-) - \Phi - CH_3$$

et a pour formule développée :

(20) 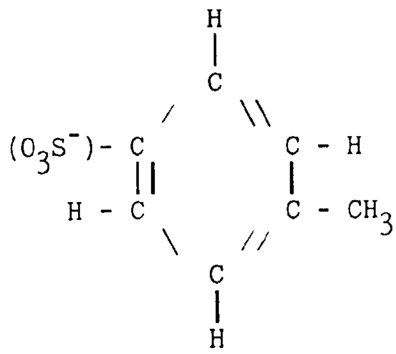

* Les sulfito-aryle ayant au moins un radical benzénique supplémentaire Φ' de formule :

(21) 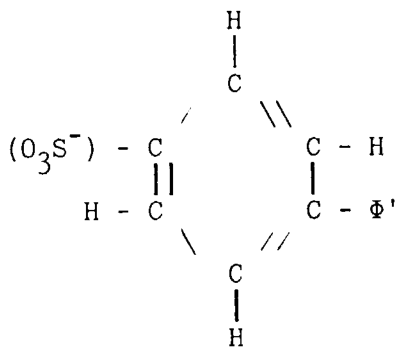

Avec cette formule, on cite : la sulfito-quinone ou le sulfito-polybenzène

(22) 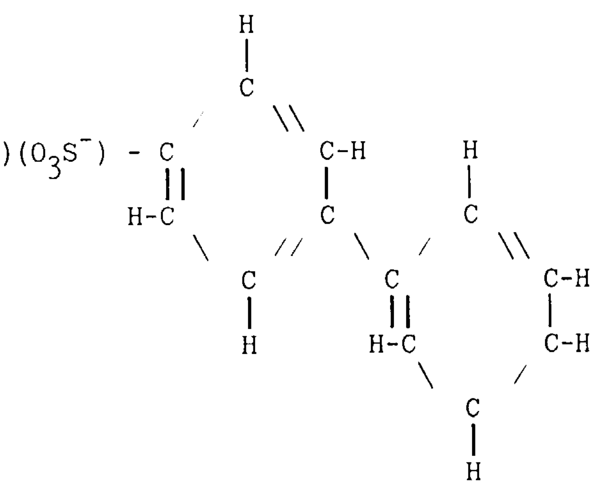

les radicaux benzéniques supplémentaires peuvent être plus nombreux que 2.

Parmi les sulfito-aryle ayant un radical benzénique supplémentaire, on cite aussi le sulfito-naphtalène avec le radical sulfito en position métha :

(23) 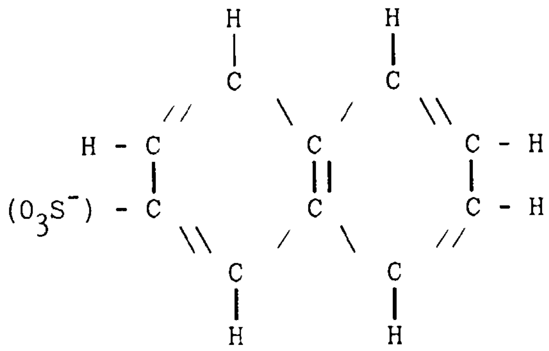

Parmi les anions sulforganiques a radical sulfito, on retiendra également particulièrement :

* les sulfito-alkyles ($SO^-_3$)-R, où le radical sulfito ($SO_3^-$) est lié à un radical alkyle R formant une chaîne saturée ou insaturée selon la formule (5). Parmi les sulfito-alkyle on cite comme exemples :

(24) $(O_3S^-) - CH_3$ le sulfito-méthyl

(25) $(O_3S^-) - CH_2 - CH_3$ le sulfito-éthyl

Parmi les anions sulforganiques à radical sulfito ($SO^-{}_3$), on retiendra aussi particulièrement les sulfito halogénures organiques. On représente ci-après un ion halogène par X. On citera comme exemples :

* les sulfito-halogénures d'alkyle tels que :

(26) $(O_3S^-)-C_n X_\ell H_{2n+1-\ell}$

où X est un halogénure tel que F, Cl, Br ou I et ou $\ell$ est un nombre entier compris entre 0 et 2n+1.
Parmi les sulfito-halogénures d'alkyle, on retiendra particulièrement les sulfito-alkyle-fluorés tels que :

(27) $(O_3S^-) - CF_3$

en abrégé tofl

* les sulfito-halogénures d'aryle tels que :
les sulfito-aryle-fluorés de formule :

(28) 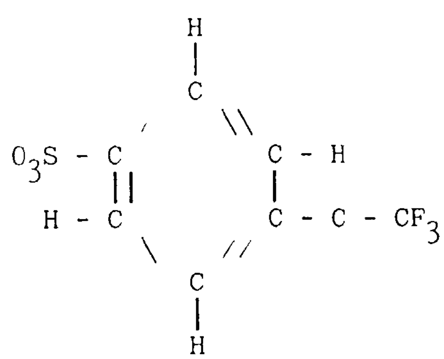

Ie) **La formulation des molécules**

On présentera ci-après quelques formulations simples de composés de départ entrant dans la sous-famille sélectionnée selon l'invention.

* Molécule formée du complexe de l'ion métallique $Fe^{2+}$ et du ligand aminotriazole ($NH_2$-trz), avec un anion tosylate ($tos^-$)

$$(29) \qquad Fe^{2+} (NH_2 - trz)_3 (tos^-)_2$$

dont la formule dévelopée est :

(29')
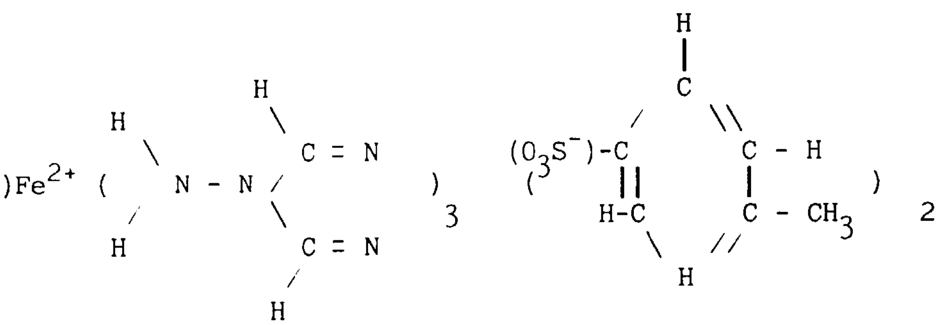

*/ Molécule formée du complexe de l'ion métallique $Fe^{2+}$ et du ligand aminotriazole ($H_2N$-trz), avec un anion sulfito-alkyle-fluoré

$$(30) \qquad Fe^{2+} (NH_2 - trz)_3 (tofl^-)_2$$

dont la formule dévelopée est :

(30)'
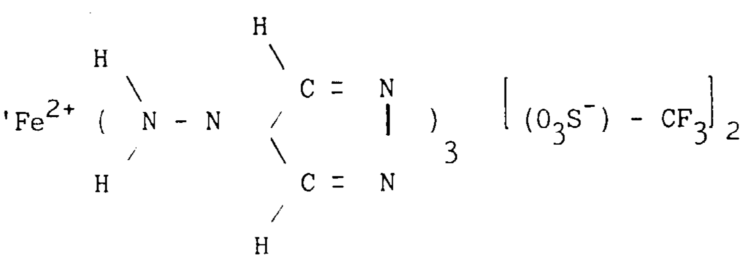

If) **Construction du réseau**

On a cité plus haut que le terme d'entropie TΔS impliquait la participation d'un terme dû au réseau.

Ce terme de réseau résulte quant à lui de la participation d'un terme de désordre thermique qui est une fonction de la température T, et d'un terme de structure ou d'ordre.

Par exemple, un composé présentant des ponts liants entre noyaux métalliques impliquera l'existence d'un facteur d'ordre à courte distance.

Pour présenter une bonne coopérativité entre molécules, c'est-à-dire des transitions de spin franches et nettes, dans lesquelles toutes les molécules transitent à la fois, ou bien aucune ne transite, le composé doit donc comporter des liaisons entre les complexes ions métalliques-ligands.

Ainsi, plus la coopérativité, dans un complexe, est grande, plus l'effet retard est grand, et plus l'amplitude ΔT d'hystérésis sera importante. La coopérativité des molécules est augmentée par la présence de molécules d'eau, à raison d'au moins 1 molécule d'eau par molécule du complexe de l'ion métallique. Ces molécules d'eau se placent dans le réseau uniquement liées par liaison du type hydrogène au ligand aminotriazole. Ces molécules d'eau ne sont pas liées par liaison covalente. Elles agissent sur la force de liaison inter-moléculaire. Le composé de départ à transition de spin a donc selon le complexe métal-ligands choisi, et selon l'anion choisi, de nombreuses formulations possibles.

A titre d'exemple, on présente ci-après deux formulations :

* Réseau correspondant à la molécule (29) précédemment décrite :

(31) $Fe^{2+} (NH_2 - trz)_3 (tos^-)_2, mH_2 O$

où m est un entier égal ou supérieur à 1. Par exemple m = 6.

* Réseau correspondant à la molécule (30)

(32) $Fe^{2+} (NH_2 - trz)_3 (tofl^-)_2, mH_2 O$

L'effet étonnant trouvé selon l'invention est que le choix de l'anion de la molécule parmi les anions sulforganiques permet de contrôler et d'augmenter la force des liaisons intermoléculaires dans le réseau. Ces nouveaux anions sélectionnés, induisent de manière inattendue l'existence d'un facteur d'ordre à courte distance et un effet retard plus grand ; ils permettent d'obtenir maintenant une amplitude $\Delta T$ d'hystérésis plus grande, correspondant à une région de bistabilité des états haut spin et bas spin d'amplitude suffisante pour l'application industrielle envisagée.

II/ Procédé de réalisation des composés de départ

A titre d'exemple, pour réaliser le composé ayant un réseau (31) précédemment décrit :

(31) $Fe^{2+} (NH_2\text{-}trz)_3 (tos^-)_2, H_2O$

On effectue un mélange de :

* n moles du précurseur du noyau du composé selon l'invention, c'est-à-dire n moles formées de l'ion fer $Fe^{2+}$ liée au contre-ion ($tos^-$) selon la formule :

(33) $n\ Fe^{2+} (tos^-)_2, 6\ H_2O$

utilisé dans une solution de méthanol pur $CH_3\text{-}OH$ à la concentration de 10 n moles par litre ;

* et de 3n moles de 1-2-4 aminotriazole ($NH_2$-trz) dans une solution de méthanol pur $CH_3\text{-}OH$, à la concentration de 30n moles par litre.

Ce mélange est effectué à température ambiante, de l'ordre de 293 à 300 K. Dans ce procédé de réalisation n est un nombre supérieur à zéro.

Pour obtenir la présence d'au moins une molécule d'eau dans le réseau, on ajoute à ce mélange des molécules hygroscopiques telles que :

(34) $Mg(ClO_4)_2$,

(35) $KClO_2$,

(36) $Na\ ClO_4$

en proportion de 25 à 100 % en masses des moles du précurseur du noyau métallique.

Ce mélange est ensuite concentré sous vide, par exemple à une pression d'environ $4.10^3$ Pa (30 mm de mercure ; on rappelle que 760 mm de Hz = $10^5$ Pa), et en le portant simultanément à une température comprise entre 333 K et 343 K, par exemple environ 338 K.

Un composé de formule :

(31) $Fe^{2+} (NH_2\text{-trz})_3 (tos^-)_2, mH_2O$

précipite rapidement.

Dès que le précipité est obtenu, le solvant est éliminé complètement et dans les plus brefs délais par filtrage pour obtenir le composé pur à 99 % en masse.

Le composé AA/ de formule

(29) $Fe^{2+} (NH_2\text{-trz})_3 (tos^-)_2,$

$mH_2O$ est alors sous une forme pulvérulente, ou en poudre, de couleur pourpre.

Si le solvant n'est pas éliminé immédiatement, et si la molécule $Fe^{2+}(NH_2\text{-trz})_3 (tos^-)_2$ reste en contact avec une faible ou très faible (quelques mℓ) quantité du solvant méthanol, alors cette molécule se "déprotone" pour donner la variante de l'invention qui comprend, outre le ligand aminotriazole obligatoire, un second ligand qui est un triazolate ($trz^-$). Le composé, dans cette variante a pour formule :

(37) $Fe^{2+} (NH_2\text{-trz})_2 (trz^-) (tos^-)_2, mH_2O$

ou bien un mélange de ce dernier :

(37) $Fe^{2+} (NH_2\text{-trz})_2 (trz^-) (tos^-)_2, mH_2O$

avec :

(31)+ $Fe^{2+} (NH_2\text{-trz})_3 (tos^-)_2, mH_2O$

Dans ce mélange le composé ayant deux ligands est toujours majoritaire. Il faut donc savoir que les propriétés du composé à deux ligands vont primer sur celle du composé ayant le seul ligand aminotriazole.
Cependant, comme on l'a exposé précédemment, grâce à l'action de l'anion tosylate ($tos^-$) les propriétés voulues de :

- large région de bistabilité $\Delta T$
- température moyenne de bistabilité $\simeq T_R$ sont toujours obtenues.

Dans le cas où l'ion fer $Fe^{2+}$ est utilisé comme métal, il convient d'éviter son oxydation. En effet on a vu qu'en passant de l'état bas spin d'origine à l'état haut spin par une action thermique, le composé passe de la couleur pourpre d'origine à une couleur blanche. Ce composé blanc, stable à l'état haut spin, pourrait jaunir à la longue particulièrement s'il contient un excès de fer $Fe^{2+}$. En effet dans ce cas, ce fer $Fe^{2+}$ se trouve non pourvu de ligands, et s'oxyde en présence d'eau pour résulter en $Fe^{3+}$. Comme on l'a expliqué précédemment, la présence de l'ion $Fe^{3+}$ doit être évitée car il masque les propriétés voulues de changement de couleur lors de la transition de spin.

La couleur blanche doit donc être stabilisée dans le cas du fer particulièrement. Cette stabilisation est obtenue en ajoutant au produit en poudre, ou au produit sous forme pulvérulente, une quantité inférieure à 5 % en masse, d'un réducteur, par exemple l'acide ascorbique.

D'autres solvants organiques de type alcool peuvent être utilisés pour la préparation des composés à la place du méthanol.

D'une manière générale, le procédé de réalisation des composés selon l'invention comprend la mise en présence de :

n moles d'un précurseur de l'ion métallique M, ce précurseur étant utilisé en solution alcoolique comme déjà décrit, comprenant comme contre-ion, l'anion sulforganique choisi,
et 3 n moles de ligands parmi les triazoles substitués dont au moins n moles du ligand obligatoire aminotriazole en solution alcoolique.

Le procédé est ensuite poursuivi comme décrit précédemment pour le composé de départ de formule (31).

IV - **Propriétés générales des composés à transition de spin de la sous-famille sélectionnée selon l'invention**

En référence avec la FIG.1, les composés de la sous-famille décrits plus haut présentent des transitions de spin induites THERMIQUEMENT.

Ces transitions de spin sont accompagnées de modifications électroniques et structurelles des molécules. Ces modifications provoquent un changement abrupt du spectre d'absorption des molécules et donc de la couleur des composés du fait que les transitions entre les niveaux électroniques sont devenues différentes.

Ainsi, dans l'état bas spin (LS) les composés sont pourpre foncé ; alors que dans l'état haut spin (HS) les composés sont blancs comme la craie. Le contraste entre les couleurs de ces composés dans ces deux états est très grand.

Le changement d'état de spin est donc détectable OPTIQUEMENT.

Chacun des états haut spin ou bas spin est stable à une température voisine d'une température dite critique. Les deux états haut spin et bas spin sont stables à cette température critique de façon concomitante.

Ces matériaux présentent en effet, lors des transitions de spin, un effet retard, dû à la coopérativité intermoléculaire. Il en résulte un effet d'hystérésis.

La FIG.1 illustre le fait que ces composés présentent deux puits de potentiel, l'un correspondant à la courbe A, relatif à l'état bas spin, et l'autre correspondant à la courbe B, relatif l'état haut spin. Ces puits de potentiel A et B sont séparés par une barrière de potentiel. Le bas Ao du puits A(LS) correspond à un premier niveau d'énergie $H_{LS}$ et à une première distance métal-ligand $D_{LS}$, et le bas Bo du puits B (HS) correspond à un second niveau d'énergie $H_{HS}$ et à une seconde distance métal-ligand $D_{HS}$.

La différence d'énergie entre les bas Ao et Bo des deux puits de potentiel est notée $\Delta H = H_{HS} - H_{LS}$.

Par application d'une augmentation de température à l'un des composés sélectionnés, qui au départ est placé dans l'état bas spin (LS) où les électrons sont piégés dans le premier puits de potentiel A, des états haut spin excités sont induits. Mais ces états excités ne sont pas stables et les électrons retombent, via des transitions permises, en suivant une voie de relaxation principale qui est celle du second puits de potentiel B, correspondant quant à lui à un état haut spin parfaitement stable.

Les électrons restent alors piégés dans le second puits de potentiel B et ne retournent pas spontanément dans le premier puits de potentiel A correspondant à l'état bas spin. Pour retourner dans l'état bas spin, les composés doivent être refroidis.

La FIG.2 montre la courbe d'un cycle d'hystérésis du composé de formule chimique (31) tel qu'obtenu directement par le procédé décrit plus haut. Ce composé est pris ci-après comme exemple.

La fraction molaire MF de matériau ayant transité à une température T (en degrés Kelvin) est portée en ordonnée et la température T et portée en abscisse.

La courbe de la FIG.2 montre que ce composé a un cycle d'hystérésis compris entre :

$T_{HS}$ = 330 K pour la température de transition haut spin,

$T_{LS}$ = 260 K pour la température de transition bas spin.

Pour des températures inférieures à la température $T_{LS}$, le composé prend l'état bas spin (LS), et pour des températures supérieures à la température $T_{HS}$, le composé prend l'état haut spin (HS).

Pour une température Tc $\simeq$ 295 K qui est la température critique moyenne, les deux états haut spin et bas spin induits antérieurement par une variation thermique apropriée, restent stables indéfiniment.

Ces propriétés n'étaient jamais obtenues par l'enseignement de la demande de brevet EP 0 543 465, du fait d'une sélection différente des anions.

Donc, lorsque l'on part d'un composé à la température ambiante $T_R \simeq$ 296 K qui est la température ambiante proche de la température critique idéale, le composé se trouve dans l'état bas spin et est de couleur pourpre, puisque

$$T_R < T_{HS}.$$

Puis, lorsque l'on chauffe le composé à une température T telle que $T_{HS} \leq T$, c'est-à-dire 330 K < T, il devient blanc, car il est dans l'état haut spin.

Ensuite, lorqu'on ramène le composé à la température ambiante $T_R \simeq 296°$, il reste blanc car il se trouve dans la zone de bistabilité où les deux états haut spin et bas sont stables, indéfiniment, et de façon concomitante, car $T_{LS} < T_R$.

Lorsque maintenant on refroidi le composé à une température inférieure à la température de transition bas spin $T_{LS}$, c'est-à-dire $T \leq$ 260K, ce composé redevient pourpre car il passe à nouveau à l'état bas spin.

Puis, une fois qu'il a été refroidi au-dessous de $T_{LS}$, lorsqu'on le ramène à la température ambiante $T_R$ = 296 K, le composé reste pourpre : il reste dans l'état bas spin, puisque

$$T_{LS} < T_R < T_{HS}$$

Ces opérations peuvent être répétées indéfiniment à volonté par simple action thermique sur le composé. La détection de la transition de sin s'effectue optiquement.

Tous les composés sélectionnés dont les formules générales ou particulières sont proposées plus haut montrent les mêmes propriétés et les mêmes effets étonnants que ce qui vient d'être décrit relativement au composé de formule (31).

V - **Dispositif d'inscription, mémorisation et affichage de données.**

Un dispositif d'inscription, mémorisation et affichage de données incluant au moins un des composés sélectionnés selon l'invention est proposé ci-après à titre d'exemple. Ce dispositif comprend :

A) **un milieu actif et un support : un ECRAN**

La réalisation d'un dispositif d'inscription, mémorisation et affichage comprend, d'abord, la réalisation d'un milieu actif incluant un ou plusieurs composés chimiques à transition de spin sélectionnés et décrits précédemment, ce milieu étant lui-même associé à un support.

Dans un premier exemple, le milieu actif peut être favorablement formé d'un film mince du composé chimique déposé directement sur le support. A cet effet, le film peut être réalisé par évaporation d'un solvant contenant la poudre du composé chimique sélectionné.

Dans un second exemple, le composé chimique en poudre peut être enrobé dans un matériau transparent. Ce matériau peut être une résine polymérisable transparente déposée sur le support.

Le support peut être une plaque de toute forme périphérique, carrée, rectangulaire, polygonale, ou circulaire, ovale, etc, et de toutes dimensions. Notamment, de très grandes dimensions aussi bien que de très petites dimensions peuvent être envisagées. Le support pourra être choisi rigide ou souple. De plus, un grand nombre de matériaux favorablement non cassants et de faibles coûts se prête très bien au rôle de support pour les composés à transition de spin, par exemple un matériau synthétique.

On peut envisager que le dispositif travaille en réflexion, ou bien travaille en transmission. Pour le travail en transmission, le support peut être en un matériau transparent.

Dans le dispositif d'inscription, mémorisation et affichage, le milieu actif est délimité en zones d'affichage et en zones de fond.

Dans ce qui suit, le milieu actif lié à son support est noté ECRAN, par soucis de simplicité d'écriture.

B) **Un système d'adressage thermique**

Le dispositif doit en outre comprendre des moyens pour modifier localement ou globalement la température du milieu actif.

Ces moyens consistent en un système d'adressage thermique pour modifier la température des zones d'affichage, et celles des zones de fond si nécessaire.

Ce système d'adressage thermique comprend d'une part :

B1) des moyens de chauffage tels que :

- un crayon chauffant,
  Un crayon chauffant peut être réalisé par exemple au moyen d'un faisceau laser dans le domaine de l'infrarouge ou bien d'un faisceau laser de longueur d'onde 520 mm,
- un crayon chauffant peut être aussi du type à chauffage résistif,
- une matrice de plots chauffants résistifs, adressés selon des lignes et des colonnes en X, Y (ici X et Y désignent des coordonnées pour repérer les plots dans la matrice bidimensionnelle).

Cette matrice de plots chauffants peut comprendre deux réseaux d'électrodes croisées entre elles. Dans une réalisation particulière, le milieu actif peut être disposé entre les deux réseaux d'électrodes, avec un système de dissipation de la chaleur. Favorablement, les électrodes peuvent être transparentes et réalisées par exemple en InSnO (en anglais Indium Tin Oxide). Dans cette réalisation particulière, le dispositif d'inscription, mémorisation et affichage peut travailler aussi bien en transmission, qu'en réflexion.

Si, dans l'application envisagée, il n'est pas indispensable que les électrodes soient transparentes, elles peuvent être en tous métaux classiquement utilisés à cet usage.

L'avantage du dispositif incluant une matrice d'électrodes X, Y, est qu'il peut recevoir et afficher des messages, des données ou des informations, codés en X, Y.

Selon l'invention, on peut par exemple appliquer le système ainsi constitué à la réalisation d'un dispositif d'émission-réception avec affichage du message transmis.

B2) des moyens de refroidissement, tels que :

- des moyens de refroidissement global du support,
- des moyens de refroidissement partiel tels que des éléments Peltier pour refroidir sélectivement les zones d'affichage, ou les zones de fond.

VI - **Procédé pour mettre en oeuvre ces dispositifs**

En référence avec la FIG.3 on a représenté un dispositif d'écriture-effaçage et affichage d'informations réalisé en utilisant le composé de formule (31) décrit plus haut pour former un milieu actif.

Avec ce dispositif, on dispose comme on l'a dit plus haut de moyens pour chauffer ou refroidir localement un écran formé d'un support couvert du milieu actif incluant le composé AA), aux diverses températures $T_{LS}$, $T_R$, $T_{HS}$, dans au moins une zone d'affichage 3 et dans une zone de fond 2. Dans l'exemple illustré par la FIG.3, l'écran 1 montre une seule zone d'affichage 3 : dans cet exemple la zone d'affichage est un motif géométrique, la lettre de l'alphabet "Z".

A l'aide des moyens de chauffage et refroidissement, on fait subir localement au milieu actif de cet écran, dans cette zone d'affichage, à l'emplacement de ce motif, les perturbations thermiques successives suivantes :

A) On part de la température ambiante $T_R$ = 296K : l'écran est uniformément pourpre (FIG.3A) ; on est dans l'état bas spin pour tout l'écran 1, c'est-à-dire pour la zone d'affichage 3 et pour le fond 2.

B) On porte la zone d'affichage du motif à une température T :

$$T_{HS} \leq T$$

c'est-à-dire 330 K ≤ T : le motif 3 en forme de Z apparaît en blanc sur fond pourpre (FIG.3B) ; la zone du motif est resté dans l'état haut spin ; le fond est resté pourpre car il est resté dans l'état bas spin.

C) On ramène la zone du motif 3 à la température ambiante $T_R$ = 290 K : la zone du motif reste blanche car elle est toujours dans l'état haut spin ; le fond de l'écran reste pourpre dans l'état bas spin (FIG.3C). Cette situation peut être maintenue indéfiniment. En effet, l'état bas spin du fond, et l'état haut spin du motif sont stables de façon concomitante indéfiniment. Par indéfiniment, on entend plusieurs annnées si nécessaire. Comme la zone de bistabilité est large puisqu'elle est située entre 260 K et 330 K, le changement d'état de spin ne peut pas se produire fortuitement dans un fonctionnement normal d'un dispositif d'affichage.

D) On diminue la température de la zone du motif jusqu'à une température $T \leq T_{LS}$ c'est-à-dire T ≤ 260 K : la zone du motif redevient pourpre (FIG.3D). Le fond est encore dans l'état bas spin pourpre. Tout l'écran est maintenant uniformément pourpre.

E) On réchauffe la zone du motif jusqu'à la température ambiante $T_R$ = 296 K, il en résulte que la zone du motif reste pourpre car cette zone est maintenant dans l'état bas spin. Tout l'écran est donc maintenant pourpre de façon stable.

Grâce aux propriétés intéressantes des composés sélectionnés selon l'invention, l'information est donc affichée et MEMORISEE dans les étapes B et C, puis effacée dans l'étape D. L'écran effacé est maintenu en attente d'autres informations à température ambiante dans l'étape E. Cette étape E est donc une étape d'initialisation ou de réinitialisation.

Le composé est alors redevenu vierge d'informations et il est réutilisable pour une nouvelle étape d'inscription.

En utilisant les étapes A, B, C, D et E, le composé peut être utilisé pour afficher des informations en imposant l'instant (étape B) où l'on écrit l'information et l'instant (étape D) où on l'efface totalement. L'information peut être mémorisée dans un, ou provenir d'un, dispositif annexe, autre que le milieu actif de l'écran. Le milieu actif réalisé avec le composé peut être utilisé avec seulement une fonction d'affichage.

Puis en utilisant l'étape C, le composé permet d'afficher par action thermique une information, de la mémoriser dans le milieu actif de l'écran et de la conserver, à température ambiante, sans consommation d'énergie, avant de l'effacer par action thermique. Le milieu actif de l'écran a donc en plus de la fonction d'affichage, une fonction de mémoire. Cette fonction mémoire ne consomme aucune énergie puisqu'elle a lieu à température ambiante. Seules les opérations d'affichages et d'effacement nécessitent une énergie pour une action thermique.

Les propriétés qui ont été décrites ci-dessus pour le composé de formule chimique (31), sont également celles des autres composés décrits plus haut.

**VII - Applications et avantages des dispositifs d'inscription. mémorisation et affichage**

Un dispositif d'affichage incluant un milieu actif selon l'invention peut avantageusement être utilisé pour réaliser un écran d'affichage à très bas coût pour une carte à mémoire. Comme on l'a dit précédemment, le milieu actif peut être associé à un support synthétique, formant un système particulièrement bien adapté à coopérer avec un autre support synthétique tel que celui de la carte. De plus le milieu actif associée à son propre support peut être extrêmement mince. L'utilisation de ce système milieu actif/support, pour réaliser un écran pouvant afficher les données stockées dans une carte à mémoire, est donc particulièrement favorable.

Un tel dispositif d'affichage peut aussi être utilisé dans de nombreux autres appareils où la fragilité d'un écran à cristaux liquides est défavorable, notamment pour l'affichage de données concernant le fonctionnement d'appareils électroménagers. Le dispositif d'affichage peut encore être utilisé pour les calculatrices, les appareils audio, vidéo, de jeux, etc, et notamment les écrans de moniteurs, les écrans d'affichage public, urbain ou d'aéroport, etc. Un tel dispositif d'affichage peut remplacer un grand nombre des applications des dispositifs d'affichage à cristaux liquides mais n'est pas limité à ces applications du fait qu'il peut être réalisé sur des très grands supports.

Une application du dispositif d'affichage peut être par exemple du type "ardoise magique". Cette ardoise est un dispositif qui utilise un crayon chauffant en combinaison avec un milieu actif incluant les composés sélectionnés. Une telle ardoise magique pourrait être utilisée pour visualiser les données introduites dans un support de stockage informatique au moyen d'une tablette tactile classique.

Cette ardoise magique constitue un dispositif particulièrement intéressant pour inclure dans une interface utilisateur-"machine" lorsque la "machine" est un système ou dispositif MULTI-MEDIA. Par dispositif MULTI-MEDIA, on entend un ensemble composé de sous-ensembles mobiles ou fixes de systèmes sources d'informations, de supports de sources d'informations, de systèmes de transmission d'informations, de systèmes de réception d'informations, sous forme audio, vidéo ou de stockage d'informations, ces informations étant rendues disponibles, d'un sous-ensemble à un autre, par la commande d'une interface, par un utilisateur.

Un avantage des écrans comprenant un milieu actif selon l'invention est qu'ils peuvent être de très petite dimension ou de très grande dimension. La dimension de l'écran dépend uniquement de celle du support.

Un avantage des écrans comprenant un milieu actif selon l'invention est qu'ils sont particulièrement résistants mécaniquement ; en particulier, ils sont beaucoup moins fragiles que les actuels écrans à cristaux liquides. La résistance mécanique des écrans selon l'invention est uniquement liée à celle du support du milieu actif.

Un avantage de ces écrans comprenant un milieu actif selon l'invention est qu'ils peuvent supporter, sans être endommagés, des températures beaucoup plus basses que leur température bas spin, ou beaucoup plus hautes que leur température haut spin. Pour remettre le dispositif en marche après avoir fait subir à l'écran un état de température non prévu, il suffira de réinitialiser le système d'adressage thermique pour afficher le fond de la couleur voulue, par exemple pourpre, à température ambiante. A cet effet, il est utile de prévoir des moyens de refroidissement et de chauffage de toute la surface du milieu actif.

En outre, si de tels moyens sont prévus, ils permettront à l'utilisateur de travailler à volonté en fond pourpre ou en fond blanc.

## Revendications

1. Composé chimique de départ à transition de spin, sous forme pulvérulente, incluant un réseau avec des molécules formées chacune d'un complexe où un ion métallique M présentant une configuration électronique en d5, ou en d6 ou en d7 est associé à au moins un ligand aminotriazole de formule :

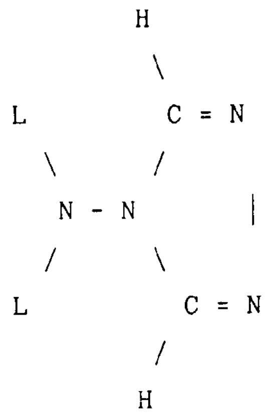

formule aminotriazole dans laquelle L est un radical alkyle ($C_nH_{2n+1}$) et n est un nombre entier égal ou supérieur à zéro, chaque molécule incluant en outre un anion sulforganique, comportant un radical sulfito ($SO^-_3$) et le réseau incluant en outre au moins une molécule d'eau ($H_2O$) par molécule du complexe du métal M, la ou les molécules d'eau présentes dans le réseau étant uniquement liée(s) par liaison de type hydrogène au ligand aminotrizole.

**2.** Composé selon la revendication 1, comprenant, associés à l'ion métallique M, plusieurs ligands, selon l'une des formulations suivantes :

$$M\ [L_2\ N\text{-}trz]_{3-x}\ [L'_2\ N\text{-}trz]_x$$

où L et L' sont deux alkyle différents, et où x est une concentration comprise entre 0 et 3 ;

$$M\ [L_2\ N\text{-}trz]_{3-x-y}\ [L'_2\ N\text{-}trz]_x\ [L''_2\ N\text{-}trz]_y$$

où L, L', L" sont trois alkyle différents, où x et y sont des concentrations telles que x+y <3 ;

$$M\ [L_2\ N\text{-}trz]_{3-x}\ [R\text{-}trz]_x$$

où 0 <x <3 et où R est un radical alkyle ($C_n\ H_{2n+1}$) ;

$$M\ [L_2\ N\text{-}trz]_{3-x-y}\ [R\text{-}trz]_x\ [R'\text{-}trz]_y$$

où x + y <3 et où R' est un second radical alkyle ;

$$M\ [L_2\ N\text{-}trz]_{2-x}\ [R\text{-}trz]_x\ [trz^-]$$

où x <2 et où [trz-] est un radical triazolate ;

$$M\ [L_2\ N\text{-}Trz]_{3-x-y}\ [R\text{-}trz]_x\ [trz\text{-}]_y$$

où x + y <3 ;

$$M\ [L_2\ N\text{-}trz]_2\ [trz^-]\ ;$$

$$M\ (L_2\ N\text{-}trz)_{3-y}\ [trz^-]_y$$

où y <3 ;

$$M [L_2 N\text{-trz}] [trz^-]_2.$$

3. Composé chimique selon l'une des revendications 1 ou 2, dans lequel l'anion est un sulfitoaryle où le radical sulfito est lié à un radical benzénique ou à ses dérivés,

4. Composé chimique selon l'une des revendications 1 ou 2, dans lequel l'anion est un sulfitoalkyle où le radical sulfito est lié à une chaîne organique saturée ou insaturée.

5. Composé chimique selon l'une des revendications 1 ou 2, dans lequel l'anion est un sulfitohalogénure d'alkyle.

6. Composé chimique selon l'une des revendications 1 ou 2, dans lequel l'anion est un sulfitohalogénure d'aryle.

7. Composé selon l'une des revendications 1 à 6, comprenant un sel hygroscopique dans les proportions de 25 à 100 % en masse dudit composé, pour obtenir la présence de ladite molécule d'eau dans le réseau.

8. Composé selon la revendication 7, dans lequel le sel hygroscopique est le boro fluorure de fer [Fe $(BF_4)_2$], le perchlorate de magnésium [Mg $(ClO_4)_2$], le perchlorate de potassium [K $ClO_4$], le perchlorate de sodium [Na $ClO_4$], ou un mélange de ceux-ci.

9. Composé selon l'une des revendications 1 à 6, comprenant un agent réducteur en quantité inférieure à 5 % en masse dudit composé.

10. Composé selon l'une des revendications 7 ou 8 comprenant un agent réducteur en quantité inférieure à 5 % en masse dudit composé.

11. Composé selon l'une des revendications 8 ou 9, dans lequel l'agent réducteur est l'acide ascorbique.

12. Procédé de réalisation d'un composé de départ conforme à celui de la revendication 1, comprenant (n étant un nombre supérieur à zéro) :

- la formation d'un mélange, à température ambiante :

  * d'un nombre n de moles d'un précurseur $(M^{2+})$-$A_2$, $NH_2O$ ou $M^{+3}$) - $A_3$, $mH_2O$ du noyau, où A est un anion sulforganique comprenant un radical sulfito ($SO^-_3$), ce précurseur ayant pour formule selon ledit ion métallique :

$$a)\ M^{2+} (A)_2, mH_2O$$

$$b)\ M^{3+} (A)_3, mH_2O$$

    (m étant un nombre supérieur à zéro) :
    et ce précurseur étant en solution dans un solvant organique du type alcool, à une concentration d'environ 10n moles par litres,

  * avec un nombre 3n de moles de ligands 1-2-4 triazole substitué dont au moins un nombre de n moles d'un ligand 1-2-4 aminoazole en solution dans le même solvant organique de type alcool à une concentration de 30n moles par litre ;

- la concentration dudit mélange, sous vide, à une température comprise entre 330 à 350 K jusqu'à précipitation du composé recherché,
- la séparation dudit composé du solvant organique de type alcool, pour obtenir une poudre dudit composé.

13. Procédé selon la revendication 12, dans lequel le solvant organique du type alcool est le méthanol $CH_3$-OH.

**14.** Dispositif de traitement d'informations, comprenant un milieu actif inscriptible, effaçable et réinscriptible associé à un support, ce milieu actif incluant un composé de départ en poudre, ou un mélange de composés de départ en poudre conforme(s) à l'une des revendications 1 à 11, ce milieu actif étant délimité en au moins une zone d'affichage et au moins une zone de fond.

**15.** Dispositif selon la revendication 14, dans lequel le composé de départ, ou le mélange de composés de départ, est appliqué en une ou plusieurs couches sur un support.

**16.** Dispositif selon la revendication 14, dans lequel le composé de départ ou le mélange de composés de départ, est appliqué dans un matériau d'enrobage.

**17.** Dispositif selon l'une des revendications 14 à 16, comprenant en outre des moyens référencés système d'adressage thermique pour modifier au moins localement sur commande la température desdites zones d'affichage, ou la température desdites zones de fond, ou la température des zones d'affichage et de fond.

**18.** Dispositif selon la revendication 17, dans lequel le système d'adressage thermique comprend un dispositif d'adressage codé.

**19.** Dispositif selon l'une des revendications 17 ou 18, dans lequel le système d'adressage thermique comprend des premiers moyens de chauffage et des seconds moyens de refroidissement pour engendrer sélectivement dans les zones d'affichage et dans les zones de fond sur commande :

- une température supérieure ou égale à une première température ($T_{HS}$) notée température de transition de l'état bas spin vers l'état haut spin ;
- une température inférieure ou égale à une seconde température ($T_{LS}$) noté température de transition de l'état haut spin vers l'état bas spin.
- ou une troisième température ($T_R$) notée température critique située entre la température bas spin ($T_{LS}$) du phénomène d'hystérésis lié à l'effet des transitions de spin, et la température haut spin ($T_{HS}$) de ce phénomène d'hystérésis, température critique à laquelle des composés à l'état haut spin et des composés à l'état bas spin peuvent coexister.

**20.** Dispositif selon la revendication 19, dans lequel :

- la première température de transition de spin ($T_{HS}$) est environ 330 K ;
- la seconde température de transition de spin ($T_{LS}$) est environ 260 K;
- la troisième température critique (Tc) du cycle d'hystérésis est proche de la température ambiante ($T_R$) à environ 295 K.

**21.** Dispositif selon l'une des revendications 17 à 20, où le composé de départ ou le mélange des composés de départ forment un écran de visualisation de données, sur lequel des données sont affichées par la commande du système d'adressage thermique.

**22.** Dispositif du type carte à mémoire incluant un dispositif selon la revendication 21.

**23.** Dispositif du type multi-média incluant un dispositif selon la revendication 21.

**24.** Dispositif du type ardoise magique incluant un dispositif selon la revendication 21.

**25.** Dispositif du type interface entre un utilisateur et une machine, incluant un dispositif selon la revendication 21.

**26.** Procédé pour inscrire, afficher, mémoriser ou effacer des données dans le milieu actif d'un dispositif selon l'une des revendications 21 à 25, comprenant l'action du système d'adressage thermique pour réaliser des opérations de :

A) initialisation, consistant à placer le milieu actif des zones de fond, et des zones d'affichage du dispositif, à une température appropriée à induire l'état bas spin du composé, le milieu actif étant alors de couleur pourpre,
B) inscription, en appliquant dans des zones d'affichage sélectionnées une température supérieure ou égale à ladite première température haut spin ($T_{HS}$) du composé, inscription durant laquelle les zones d'affichage prennent l'état haut spin de couleur blanche du composé, et durant laquelle le fond est maintenu à une température inférieure à ladite première température $T_{HS}$, par exemple égale à la troisième température ambiante ($T_R$), le matériau actif du fond restant de couleur pourpre,
C) affichage consistant à maintenir lesdites zones d'affichage sélectionnées à une température supérieure à ladite seconde température bas spin ($T_{LS}$), par exemple égale à la troisième température ambiante ($T_R$), affichage durant lequel les zones d'affichage restent blanches étant à l'état haut spin, et durant lequel le fond est maintenu à l'état bas spin de couleur pourpre,
D) effacement en appliquant dans les zones d'affichage une température inférieure à la seconde température bas spin ($T_{LS}$), effacement durant lequel les zones d'affichage retournent à l'état bas spin pourpre, et durant lequel le fond est maintenu par exemple à la troisième température ambiante ($T_R$), le matériau actif du fond restant de couleur pourpre.

**27.** Procédé pour inscrire, afficher, mémoriser ou effacer des données dans le milieu actif d'un dispositif selon l'une des revendications 21 à 25, comprenant l'action du système d'adressage thermique pour réaliser les opérations de :

A) Initialisation, consistant à placer le milieu actif des zones de fond et des zones d'affichage à une température supérieure ou égale à ladite première température haut spin ($T_{HS}$) du composé, le milieu actif prenant alors la couleur blanche, puis retour du milieu actif à la troisième température ($T_R$) dite température ambiante, où le composé est stable dans son état haut spin blanc,
B) Inscription, en appliquant dans des zones d'affichage sélectionnées une température inférieure ou égale à ladite seconde température bas spin ($T_{LS}$) du composé, inscription durant laquelle les zones d'affichage prennent l'état bas spin de couleur pourpre du composé, et durant laquelle le fond est maintenu à la troisième température ($T_R$) comprise dans la région de bistabilité du composé pour conserver la couleur blanche de l'état haut spin,
C) Affichage consistant à ramener la température des zones d'affichage sélectionnées à la troisième température ($T_R$) comprise dans la région de bistabilité du composé pour conserver la couleur pourpre de l'état bas spin aux zones d'affichage, alors que les zones de fond sont maintenues de couleur blanche correspondant à l'état haut spin,
D) effacement en appliquant dans les zones d'affichage une température supérieure à la première température haut spin ($T_{HS}$) du composé, effacement durant lequel les zones d'affichage reprennent la couleur blanche de l'état haut spin puis retour à la troisième température ambiante ($T_R$) où le fond et les zones d'affichage restent de couleur blanche, étant dans la région de bistabilité du composé.

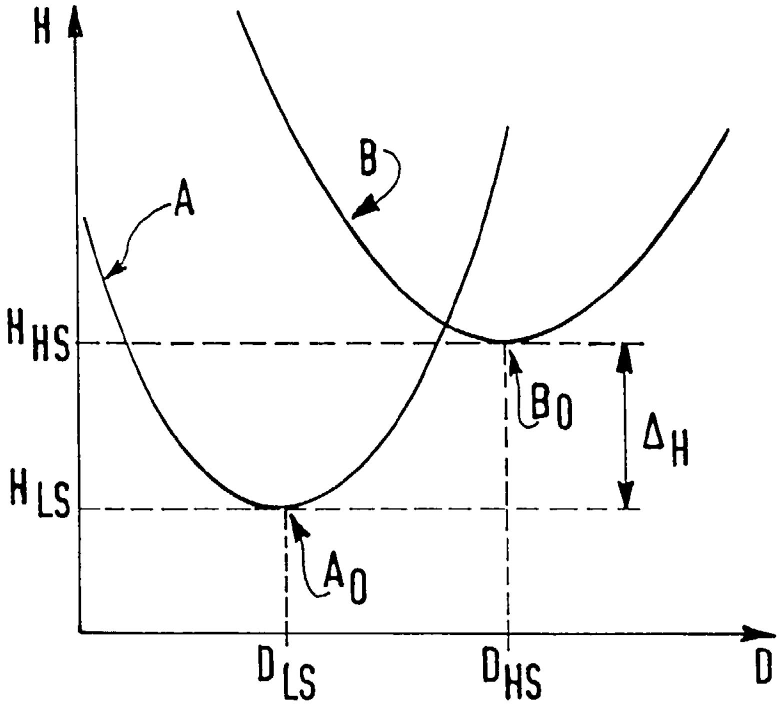
H
A
B
$H_{HS}$
$H_{LS}$
$B_0$
$\Delta_H$
$A_0$
$D_{LS}$
$D_{HS}$
D

FIG. 1

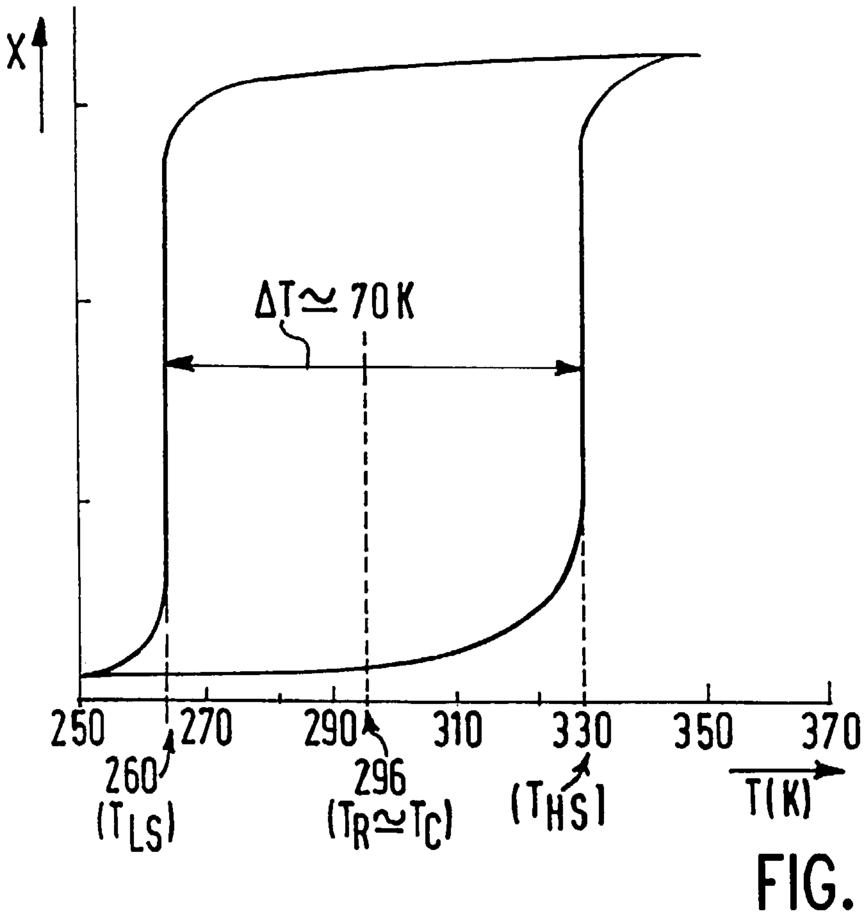
X
ΔT ≃ 70 K
250
270
290
310
330
350
370
260
($T_{LS}$)
296
($T_R \simeq T_C$)
($T_{HS}$)
T(K)

FIG. 2

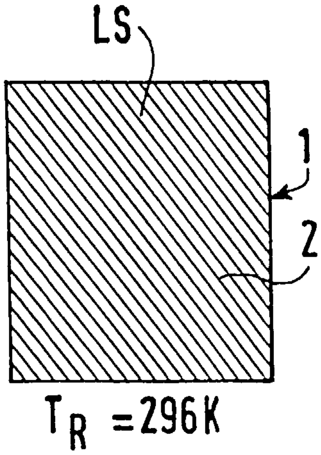


FIG. 3A

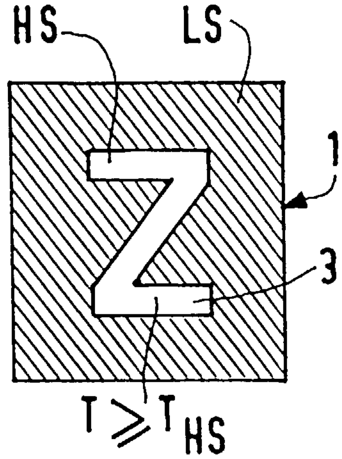


FIG. 3B

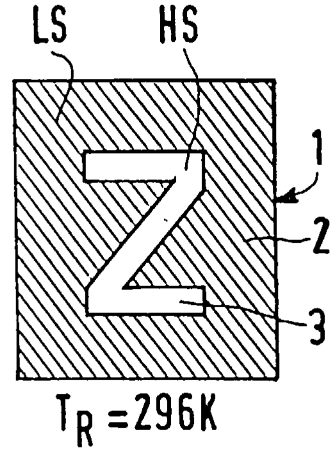


FIG. 3C

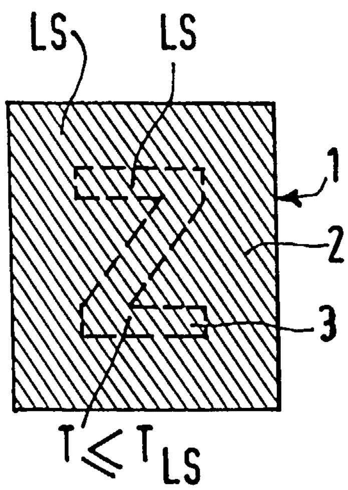


FIG. 3D

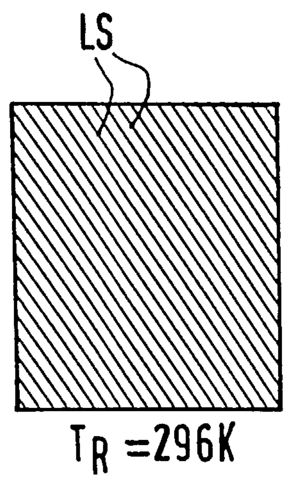


FIG. 3E

Office européen des brevets

# RAPPORT DE RECHERCHE EUROPEENNE

Numero de la demande
EP 96 20 1412

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int.Cl.6) |
| A,D | EP-A-0 543 465 (LABORATOIRES D'ELECTRONIQUE PHILIPS)<br>* le document en entier *<br>--- | 1,7,8, 14,17, 21,26,27 | G11B7/24<br>C07F15/02<br>C07F15/04<br>C07F15/06 |
| A | MOL. CRYST. LIQ. CRYST., vol. 234, 1993, pages 255-262, XP0000196334<br>C. JAY ET AL:<br>* le document en entier *<br>--- | 1,14 | |
| A | ADVANCED MATERIALS, vol. 4, no. 11, 1992, pages 718-728, XP000324149<br>O. KAHN ET AL:<br>* le document en entier *<br>----- | 1,14 | |
| | | | DOMAINES TECHNIQUES RECHERCHES (Int.Cl.6) |
| | | | G11B<br>C07F |

Le présent rapport a été établi pour toutes les revendications

| Lieu de la recherche | Date d'achèvement de la recherche | Examinateur |
|---|---|---|
| BERLIN | 9 Septembre 1996 | Van Amsterdam, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)